# EUROPÄISCHE PATENTSCHRIFT

(11) **EP 4 342 036 B1**
(45) Veröffentlichungstag und Bekanntmachung des Hinweises auf die Patenterteilung: **03.06.2026**
(21) Anmeldenummer: 22726038.7
(22) Anmeldetag: 27.04.2022
(51) Int. Cl.: H01R 13/58, G02B 6/38

(54) **SPANNTEIL FÜR KABELSTECKERANORDNUNGEN, SOWIE KABELSTECKERANORDNUNG MIT EINEM DERARTIGEN SPANNTEIL**
CLAMPING ELEMENT FOR CABLE CONNECTOR UNITS, AND CABLE CONNECTOR UNIT COMPRISING SUCH A CLAMPING ELEMENT
ÉLÉMENT DE SERRAGE POUR ENSEMBLES CONNECTEURS DE CÂBLE ET ENSEMBLE CONNECTEUR DE CÂBLE COMPRENANT UN ÉLÉMENT DE SERRAGE DE CE TYPE

(30) Priorität: 21.05.2021 AT 504022021
(43) Veröffentlichungstag der Anmeldung: 27.03.2024
(73) Patentinhaber: Neutrik AG, 9494 Schaan (LI)
(72) Erfinder: JUTZ, Bernhard, 6830 Rankweil (AT)
(74) Vertreter: Kaminski Harmann
(86) Internationale Anmeldenummer: PCT/EP2022/061201
(87) Internationale Veröffentlichungsnummer: WO 2022/242996

(56) Entgegenhaltungen:
- WO-A1-2020/250575
- DE-A1- 3 512 578

## Beschreibung

Die Erfindung betrifft ein Spannteil zur Verwendung in einer Kabelsteckeranordnung für elektrische und/oder optische Kabel, gemäss dem Oberbegriff des Anspruchs 1.

Auf dem Gebiet der Unterhaltungselektronik, der Bühnentechnik und der Übertragung von optischen und akustischen Signalen sowie der Versorgung von Verbrauchern auf diesen Gebieten mit elektrischem Strom werden an die verwendeten Bauteile sehr hohe Anforderungen gestellt. Dies betrifft einerseits die Robustheit, den Schutz der Steckverbindungen gegen Staub, Feuchtigkeit und ungewollter Trennung, sowie auch der Sicherheit.

Kabelsteckeranordnungen zur Verwendung mit elektrischen und/oder optischen Kabeln, was sowohl Daten als auch Stromversorgung betrifft, weisen oft einen modularen Aufbau auf. Sie umfassen typischerweise ein Gehäuse zur Aufnahme und zum Schutz der Kontaktelemente zur elektrischen und/oder optischen Kontaktierung einer komplementären Steckeranordnung auf. Ein zumindest abschnittsweise radial zusammendrückbar es Spannteil umgreift und klemmt das Kabel. Am hinteren Ende des Gehäuses kann eine Spannhülse aufgeschraubt werden, durch deren Wirkung alle genannten Bauteile der Kabelsteckeranordnung und das Kabel miteinander verspannt werden. Damit ist eine Zugentlastung für das Kabel bewerkstelligt.

Das Spannteil zum Klemmen des Kabels in der Kabelsteckeranordnung ist typischerweise mit zumindest einem radial zusammendrückbaren und das Kabel umgreifenden und in zusammengedrücktem Zustand das Kabel klemmenden Abschnitt und einem vorderen Randbereich zum Anliegen an einem Gehäuse der Kabelsteckeranordnung und/oder einem darin eingeschobenen Steckerfortsatz versehen, Der hintere Abschnitt ist dabei meist durch eine Anzahl von entlang des Umfangs verteilte Klemmzungen gebildet, die in radialer Richtung vorzugsweise elastisch zusammengedrückt werden können.

Für Auf- oder Unterputzdosen ist, beispielsweise aus der EP 2744060 A1, ein Zugentlastungsteil für die Anwendung im Bereich der Kabeleinführung bekannt, welches klemmzungenartige Ausformungen aufweist. Diese sind unterschiedlich geformt, jedoch ist das Zugentlastungsteil radial nicht zusammendrückbar.

Spannteile bzw. Zugentlastungsteile mit radial elastisch verformbaren Klemmzungen, die jedoch alle gleich ausgebildet sind, sind in der WO2020250575A1, der DE 202012101449 U1 oder der DE 102009042678 B3 offenbart.

Nun wird zunehmend die Forderung gestellt, dass derartig aufgebaute Kabelsteckeranordnungen für eine Vielzahl von Anwendungen geeignet ist, insbesondere mit einer einzigen Ausführung einen grossen Durchmesserbereich von Kabeln abdecken kann.

Aufgabe der vorliegenden Erfindung war es, die Nachteile des Standes der Technik zu überwinden und eine Vorrichtung zur Verfügung zu stellen, mittels derer ein einzelnes Spannteil in einer Kabelsteckeranordnung Kabel unterschiedlicher Eigenschaften klemmen kann, speziell einen grossen Durchmesserbereich von Kabeln abdecken kann.

Diese Aufgabe wird durch eine Vorrichtung gemäss den Ansprüchen gelöst. Weitere Merkmale sind der Beschreibung und den Zeichnungen zu entnehmen.

Das erfindungsgemässe Spannteil ist gekennzeichnet durch zumindest zwei unterschiedliche Arten von Klemmzungen. Dies führt dann zu unterschiedlichen Eigenschaften der verschiedenen Gruppen von Klemmzungen, um damit eine Vielzahl unterschiedlicher Kabeltypen sicher klemmen zu können. Dieses Spannteil kann vorteilhafterweise bei einer Kabelsteckeranordnung verwendet werden, wie sie bislang oben beschrieben wurde, kann aber auch für sich allein in anderen und auch herkömmlichen Kabelsteckeranordnungen eingesetzt werden.

Bevorzugt ist dabei eine Ausführungsform, bei welcher jede Klemmzunge einer ersten Gruppe von Klemmzungen zumindest am dem Spannteil abgewandten Ende breiter ist als die Klemmzungen einer zweiten Gruppe von Klemmzungen. Vorteilhafterweise liegt dabei - in Umfangsrichtung gesehen - zwischen jeweils zwei Klemmzungen einer Gruppe eine Klemmzunge einer anderen Gruppe. Bei zwei unterschiedlichen Arten von Klemmzungen folgt somit auf jede Klemmzunge einer ersten Gruppe eine Klemmzungen der zweiten Gruppe und umgekehrt.

Eine weitere erfindungsgemässe Ausführungsform ist dadurch gekennzeichnet, dass sich die ersten Klemmzungen mit grösser werdendem Abstand vom vorderen Rand des Spannteils verbreitern. Vorzugsweise ist dabei eine stetige Verbreiterung vorgesehen, um über den gesamten Bewegungsbereich der Klemmzungen eine gleichmässige Einwirkung ohne sprunghafte Krafteinwirkung auf die benachbarten Klemmzungen zu gewährleisten.

Vorzugsweise sind diese Klemmzungen an ihren Seitenkanten abgeschrägt. Dies ermöglicht, insbesondere im bevorzugten Fall, dass wobei die Breite mit radial grösser werdendem Abstand zur Mittelachse des Spannteils grösser wird, allfällige dazwischenliegend angeordnete weitere Klemmzungen noch weiter radial nach innen hin zusammenzudrücken und damit den Effekt der Durchmesserverringerung bzw. der Klemmwirkung zu verstärken.

Vorzugsweise weisen zur Verbesserung der Klemmwirkung die ersten Klemmzungen an ihrem Ende einen Abschnitt auf, der zur Ausübung einer Klemmwirkung auf ein Kabel zum formschlüssigen Eindringen in den Mantel des Kabels ausgebildet sind.

Eine weitere erfindungsgemässe Ausführungsform des Spannteils sieht vor, dass die Klemmzungen einer zweiten Gruppe von Klemmzungen etwas schmäler ausgeführt sind, wodurch die elastische Auslenkung erleichtert ist und das radiale Zusammendrücken leichter bzw. in grösserem Umfang möglich ist.

Dabei ist bevorzugt vorgesehen, dass die Seitenkanten der Klemmzungen der zweiten Gruppe vorzugsweise über die gesamte Länge parallel zueinander verlaufen.

Vorzugsweise erstreckt sich zur Verbesserung der Klemmwirkung der Klemmzungen der zweiten Gruppe vom äusseren Ende der Klemmzungen bis fast hin zu deren innerem Ende ein zur Erhöhung der Haltewirkung auf das Kabel gestalteter Bereich.

Um mit dem erfindungsgemässen Spannteil einen grossen Durchmesserbereich von Kabeln abdecken zu können, ist gemäss einer bevorzugten Ausführungsform der Erfindung das Spannteil dadurch gekennzeichnet, dass bei fluchtend mit dem vorderen Randbereich verlaufenden Klemmzungen die lichte Weite zwischen den Enden der Klemmzungen zwischen 70 und 95% des Durchmessers des Spannteils beträgt und bei maximal zusammengedrückten Klemmzungen, wobei die ersten Klemmzungen aneinander liegen, die lichte Weite zwischen den Enden der Klemmzungen, vorzugsweise zwischen den Klemmzungen der zweiten Gruppe, zwischen 10 und 40% des Durchmessers des Spannteils beträgt.

Das erfindungsgemässe Spannteil kommt vorzugsweise zur Anwendung in einer Kabelsteckeranordnung für elektrische und/oder optische Kabeln, was sowohl Daten als auch Stromversorgung betrifft. Diese weisen oft einen modularen Aufbau auf und umfassen neben dem Spannteil zum Klemmen des Kabels typischerweise ein Gehäuse zur Aufnahme und zum Schutz der Kontaktelemente zur elektrischen und/oder optischen Kontaktierung einer komplementären Steckeranordnung, sowie eine am hinteren Ende des Gehäuses aufgeschraubte Spannhülse. Durch deren Wirkung beim Herstellen der Schraubverbindung mit dem Gehäuse werden alle genannten Bauteile der Kabelsteckeranordnung und das Kabel miteinander verspannt und eine Zugentlastung für das Kabel bewerkstelligt.

Bevorzugt weist eine derartige Kabelsteckeranordnung weiters eine Zudrehhülse auf, deren Länge geringer ist als jene der Spannhülse und die koaxial über zumindest einen Teilabschnitt der Spannhülse geschoben ist, und ein unidirektionales Gesperre zwischen Spannhülse und Zudrehhülse, welches eine Relativverdrehung von Zudrehhülse und Spannhülse in Festziehrichtung der Gewindeverbindung zwischen Spannhülse und Gehäuse über ein gewisses Mass hinaus verhindert. Damit kommt bei einer manuellen Verdrehung der Zudrehhülse nach einem gewissen umfangsmässigen Spiel das Gesperre zum Eingriff und bei weiterer Verdrehung der Zudrehhülse wird auch die darunterliegende Spannhülse mitgenommen und zur Herstellung der Gewindeverbindung mit dem Gewinde des Gehäuses verdreht. Allenfalls kann ähnlich einer Ratschenanordung die Zudrehhülse mehrmals immer im gleichen Winkelbereich vor- und zurückdreht werden, um die Gewindeverbindung festzuziehen, was den Zusammenbau der Kabelsteckeranordnung noch weiter erleichtert. Bei Verdrehung der Zudrehhülse im entgegengesetzten Sinn aber greift das Gesperre nicht und die Zudrehhülse dreht leer durch, ohne die Gewindeverbindung in Aufdrehrichtung zu beaufschlagen.

Bevorzugt ist dabei die Vorrichtung bei bewährtem und funktionssicherem Aufbau gekennzeichnet durch ein Formricht-Gesperre oder Zahngesperre zwischen Spannhülse und Zudrehhülse, wobei an entweder der Zudrehhülse oder der Spannhülse eine Kulisse mit zumindest einer langen, flachen Flanke und zumindest einer steilen, in Öffnungsrichtung der Gewindeverbindung zwischen Spannhülse und Gehäuse weisenden Flanke ausgearbeitet ist und am anderen Bauteil eine Sperrklinke mit einer im Wesentlichen komplementären Form ausgearbeitet ist.

Eine bevorzugte Ausführungsform der Erfindung sieht vor, die Höhe der Kulisse und der Sperrklinke sich in einer Richtung parallel zur Drehachse von Spannhülse und Zudrehhülse verändern. Dies gestattet eine Bauweise der Anordnung von Spannhülse und Zudrehhülse die eine in radialer Richtung minimale Dimension aufweist.

Eine vorteilhafte Ausführungsform der Erfindung ist weiters dadurch gekennzeichnet, dass die Länge der Sperrklinke nur einen Bruchteil der Länge der Kulisse ausmacht. Eine bevorzugte Variante sieht vor, dass die Länge der Sperrklinke maximal 10% der Länge der Kulisse aufweist.

Herstellungstechnisch besonders vorteilhaft ist eine Ausführungsform, bei welcher an der Spannhülse die Kulisse ausgebildet ist und die Sperrklinke an der Zudrehhülse ausgebildet ist.

Da aber manchmal die Notwendigkeit besteht, die gegen manuelles Auseinanderschrauben gesicherte Kabelsteckeranordnung doch auseinanderzunehmen, und dies mittels eines Werkzeugs zuzulassen, ist ein weiteres Merkmal der Erfindung dadurch gegeben, dass der dem Gewinde gegenüberliegende hintere Rand der Spannhülse über den hinteren Rand der Zudrehhülse hinausragt und Ansatzstellen für ein Werkzeug zur Ausübung eines Drehmoments auf die Spannhülse aufweist.

Besonders günstig ist dabei eine Ausführungsform der Erfindung, bei welcher die Ansatzstellen durch zumindest ein Paar ebener Flächen gebildet sind, die parallel zueinander und einander in Bezug auf die Längsmittelachse der Spannhülse gegenüberliegend angeordnet sind. Dann kann mittels eines Gabelschlüssels oder ähnlicher Werkzeuge ein Drehmoment auf die Spannhülse ausgeübt werden, entweder um die Gewindeverbindung überhaupt lösen und die Kabelsteckeranordnung auseinanderbauen zu können, oder auch um die Gewindeverbindung mit einem genau definierten Drehmoment ohne Gefahr der Beschädigung des Gesperres und der entsprechenden Bauteile anziehen zu können.

Besonders bevorzugt ist dabei eine Ausführungsform, bei welcher die Breite der ebenen Flächen in Richtung der Längsmittelachse zwischen 1 mm und 10 mm beträgt. Vorzugsweise wird eine Breite zwischen 3 mm und 6 mm gewählt. Damit ist ein sicheres Ansetzen des Werkzeuges und eine ausreichende Kontaktfläche zum Aufbringen der benötigten Drehmomente gewährleistet.

Eine weitere vorteilhafte Ausführungsform der Erfindung ist gekennzeichnet durch einen die Verschiebbarkeit der Zudrehhülse zum hinteren Rand der Spannhülse begrenzenden Anschlag. Damit ist sichergestellt, dass die Zudrehhülse nicht von der Spannhülse herunterrutschen oder unbeabsichtigt heruntergeschoben werden kann.

Eine baulich einfach herzustellende konkrete Ausführungsform einer derartigen Sicherung gegen das Abziehen der Zudrehhülse ist erfindungsgemäss gegeben durch eine zumindest über einen Teil des Umfanges umlaufende Auskragung des hinteren Randes der Spannhülse, wobei die radial Erstreckung der Auskragung grösser ist als der Innendurchmesser einer hinteren Öffnung der Zudrehhülse.

Bevorzugt ist dabei eine Ausführungsform, bei welcher sich die radiale Erstreckung der umlaufenden Auskragung zum hinteren Ende hin verringert. Dies erleichtert den Zusammenbau der Kabelsteckeranordnung, indem die Zudrehhülse von hinten auf die Spannhülse aufgeschoben werden und unter leichter, elastischer Aufweitung ihres hinteren Randbereiches über den Randbereich der Spannhülse übergeschoben werden kann.

Zum Ausgleich von Spiel zwischen der Spannhülse und der Zudrehhülse ist eine vorteilhafte Ausführungsform einer erfindungsgemässen Kabelsteckeranordnung gekennzeichnet durch zumindest eine Erhebung an der Aussenseite der Spannhülse, welche Erhebung den Zwischenraum zwischen Spannhülse und Zudrehhülse zumindest zum Grossteil überbrückt. Damit wird bei Bewegungen des Kabelsteckers, wie es beispielsweise bei Verwendung als Lautsprecherstecker durch die auftretenden Vibrationen auftreten kann, das Gegeneinanderschlagen von Spannhülse und Zudrehhülse vermindert. Vorzugsweise überbrücken die Erhebungen den Zwischenraum zwischen den beiden koaxialen Hülsen zur Gänze, wodurch auch ein Klappern oder Rattern ganz unterbunden ist.

Um ein ungewolltes Lösen der Gewindeverbindung zwischen Spannhülse und Gehäuse bei Vibrationen der Kabelsteckeranordnung zu verhindern, ist eine weitere vorteilhafte Ausführungsform der Erfindung gekennzeichnet durch ein unidirektionales Gesperre zwischen Spannhülse und Spannteil. Dieses ist derart ausgelegt, dass es eine Relativverdrehung von Spannhülse und Spannteil in Öffnungsrichtung der Gewindeverbindung zwischen Spannhülse und Gehäuse verhindert.

Eine bevorzugte Ausführungsform sieht dazu ein Formricht-Gesperre oder Zahngesperre zwischen Spannhülse und Zudrehhülse vor, wobei an entweder der Zudrehhülse oder der Spannhülse zumindest eine Rast und am anderen Bauteil zumindest eine Sperrklinke ausgearbeitet sind.

Besonders vorteilhaft in Bezug auf die Kräfteverteilung und damit die mechanische Stabilität ist eine erfindungsgemässe Ausführungsform mit mehreren, vorzugsweise drei, gleichmässig über den Umfang verteilten sägezahnförmigen Sperrklinken mit kurzen Flanken, die in Öffnungsrichtung der Gewindeverbindung zwischen Spannhülse und Gehäuse weisen.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer ersten Ausführungsform einer erfindungsgemässen Kabelsteckeranordnung;
- Fig. 2: eine Explosionsdarstellung der Kabelsteckeranordnung der Fig. 1;
- Fig. 3: eine Ansicht von vorne einer erfindungsgemässen Spannhülse zur Verwendung in einer Kabelsteckeranordnung;
- Fig. 4: eine Seitenansicht der Spannhülse der Fig. 3;
- Fig. 5: eine Seitenansicht der Spannhülse der Fig. 3 aus einer orthogonalen Richtung;
- Fig. 6: ein Querschnitt durch eine andere Ausführungsform einer Spannhülse in Höhe der Erhebungen;
- Fig. 7: eine Ansicht von hinten der Spannhülse der Fig. 3;
- Fig. 8: eine Seitenansicht einer erfindungsgemässen Zudrehhülse zur Verwendung in einer Kabelsteckeranordnung;
- Fig. 9: eine Ansicht der Zudrehhülse der Fig. 7 von vorne;
- Fig. 10: eine perspektivische Ansicht der Zudrehhülse der Fig. 7;
- Fig. 11: einen Längsschnitt durch die Zudrehhülse der Fig. 7;
- Fig. 12: eine Ansicht von hinten eines erfindungsgemässen Spannteils zur Verwendung in einer Kabelsteckeranordnung in ihrem Zustand mit grösstem inneren Durchmesser, vor dem Einsetzen in die Kabelsteckeranordnung;
- Fig. 13: eine perspektivische Ansicht einer erfindungsgemässen Anordnung aus Spannteil, Spannhülse und Zudrehhülse, in ihrem Zustand zur Verwendung mit einem Kabel mit dem grösstmöglichen Kabeldurchmesser;
- Fig. 14: eine Ansicht der Anordnung der Fig. 12 von vorne;
- Fig. 15: eine Ansicht der Anordnung entsprechend der Fig. 12 von vorne, in ihrem Zustand zur Verwendung mit dem geringstmöglichen Kabeldurchmesser;

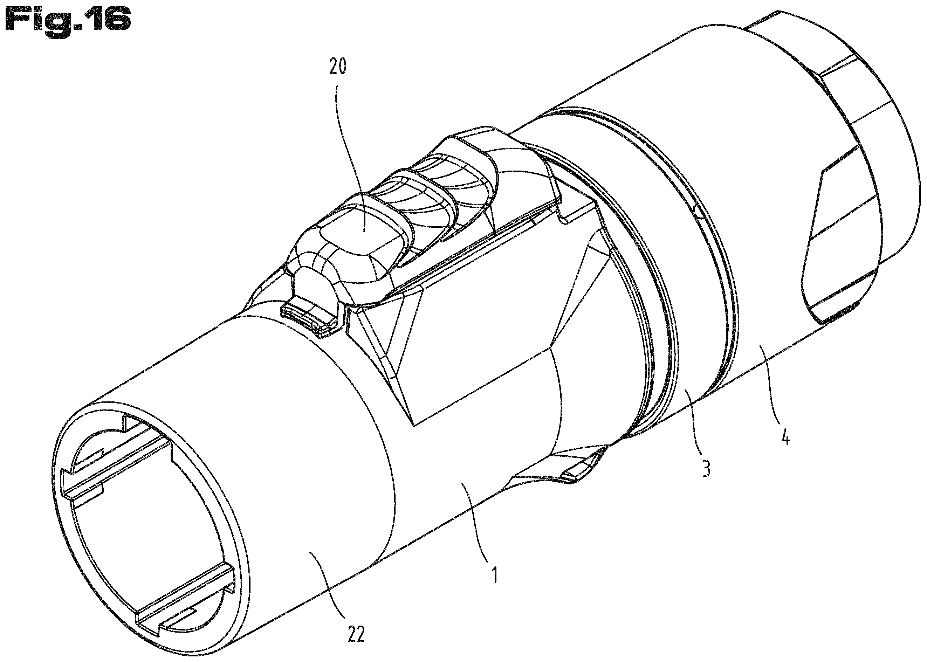

- Fig. 16: eine perspektivische Ansicht einer weiteren Ausführungsform einer erfindungsgemässen Kabelsteckeranordnung;
- Fig. 17: eine perspektivische Ansicht einer Spannhülse einer weiteren Ausführungsform der Erfindung, und
- Fig. 18: einen Querschnitt durch eine Zudrehhülse für die Spannhülse der Fig. 17.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäss auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäss auf die neue Lage zu übertragen.

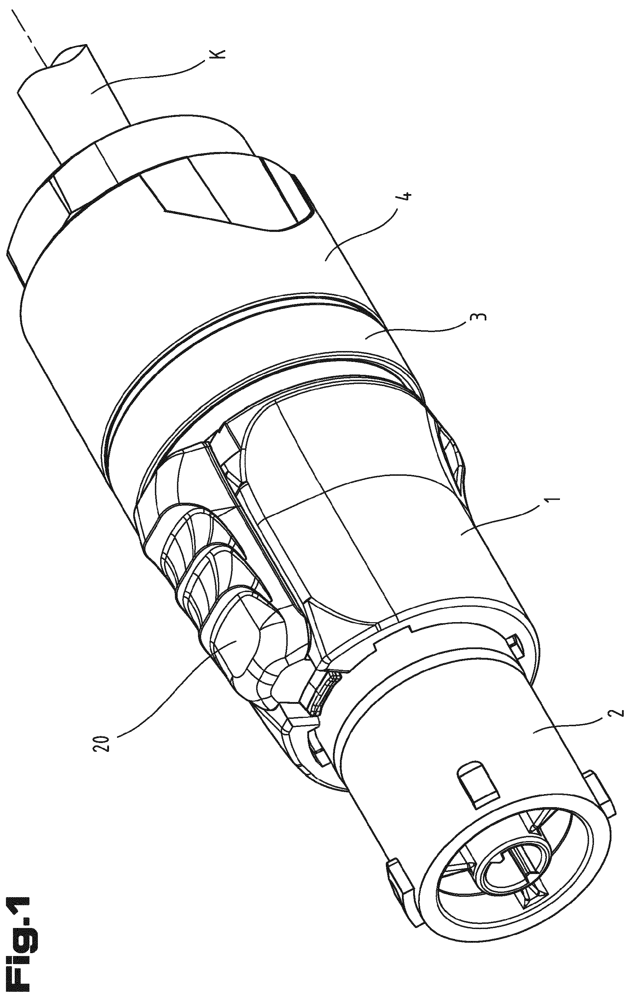

Die Fig. 1 zeigt beispielhaft eine konkrete Ausführungsform eine erfindungsgemässen Kabelsteckeranordnung zur Verbindung mit einer komplementären Steckeranordnung, wie sie typischerweise für Stromkabel oder Lautsprecherkabel im Bereich der Bühnentechnik und Veranstaltungstechnik zum Einsatz kommt. Gleiche oder ähnliche Anordnungen sind alle Arten von elektrischen und/oder optische Kabel möglich.

Aus einem Gehäuse 1 ragt nach vorne, auf einen hier nicht dargestellten komplementären Steckverbinder ein Steckerfortsatz 2 heraus. Innerhalb des Steckerfortsatzes 2 sind die Kontaktelemente zur elektrischen und/oder optischen Kontaktierung einer komplementären Steckeranordnung geschützt angeordnet. Das Gehäuse 1 trägt vorzugsweise einen Entriegelungsschieber 20 zur Lösung einer vorzugsweise vorgesehenen Verriegelung mit dem komplementären Steckverbinder. Den hinteren Abschnitt der Kabelsteckeranordnung bildet eine Anordnung aus einer Spannhülse 3 und einer koaxial dazu aufgeschobenen Zudrehhülse 4. Am hinteren Ende der Kabelsteckeranordnung tritt das Kabel K aus.

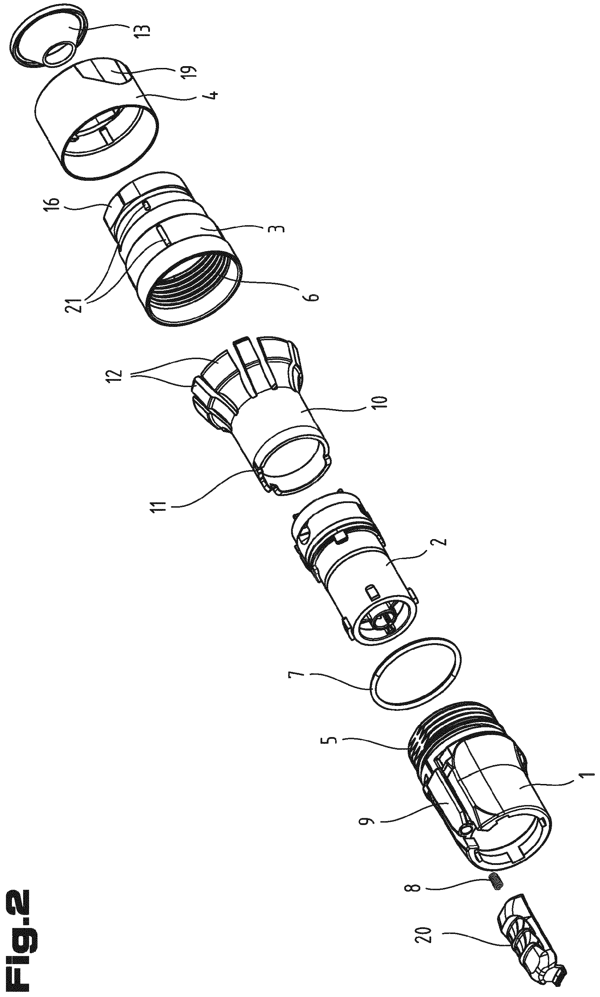

Wie in der Explosionsdarstellung der Fig. 2 zu erkennen ist, ist der Steckerfortsatz 2 typischerweise von hinten in das Gehäuse 1 eingesteckt. Er könnte aber auch ein integraler Bestandteil des Gehäuses 1 sein, das am hinteren Rand beispielsweise ein Aussengewinde 5 aufweist, um mit einem Innengewinde 6 im vorderen Bereich des Spannhülse 3 eine Gewindeverbindung herzustellen. Ein Dichtring 7 kann zwischen Gehäuse 1 und Steckerfortsatz 2 eingesetzt sein. Ein Federelement 8 sorgt für die Rückstellung des Entriegelungsschiebers 20, das auf einem Steg 9 am Gehäuse 1 in dessen Längsrichtung verschiebbar ist.

Die erfindungsgemässe Kabelsteckeranordnung umfasst weiters typischerweise ein Spannteil 10, oftmals auch Spannzange genannt. Das Spannteil 10 ist auf das Kabel K aufgeschoben, entweder in Kabellängsrichtung oder bei Vorhandensein eines Längsschlitzes auch aus einer radialen Richtung, und liegt mit seinem vorderen Randbereich 11 am Gehäuse 1 und/oder dem darin eingeschobenen Steckerfortsatz 2 an. Der hintere Abschnitt des Spannteils 10 in der erfindungsgemässen Ausführung wird durch eine Anzahl von entlang des Umfangs verteilte Klemmzungen 12 gebildet, die in radialer Richtung vorzugsweise elastisch zusammengedrückt werden können, um das dazwischen hindurch verlaufende Kabel K zu klemmen. Die radiale Kompression der unterschiedlich ausgeführten Klemmzungen 12 erfolgt beim Aufschieben der Spannhülse 3 und beim Herstellen der Gewindeverbindung zwischen Gehäuse 1 und Spannhülse 3. Dabei werden alle genannten Bauteile der Kabelsteckeranordnung und das Kabel miteinander verspannt, so dass eine exakte Positionierung der Bauteile und eine Zugentlastung für das Kabel K gegeben sind.

Am hinteren Ende der Kabelsteckeranordnung ist eine Dichtmanschette 13 vorzugsweise im Bereich des hinteren Randes der Spannhülse 3 angeordnet, durch welche das Kabel K hindurch aus der Kabelsteckeranordnung austritt.

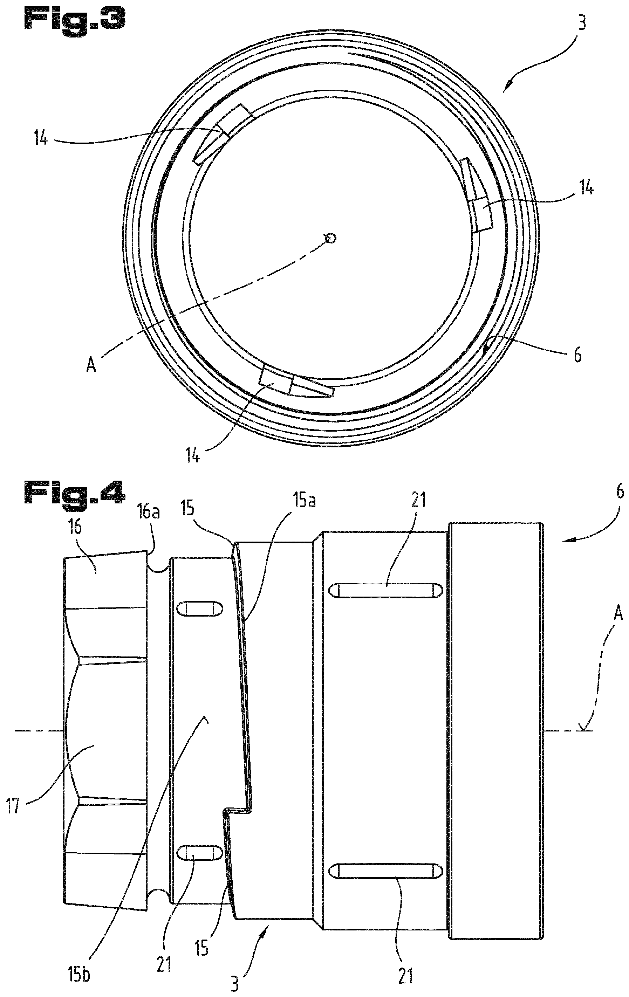

Fig. 3 zeigt eine Ansicht der erfindungsgemässen Spannhülse 3 aus Richtung des Gehäuses 1 her gesehen. Dabei ist zu erkennen, dass zumindest der Innendurchmesser vom vorderen Rand der Spannhülse 3, an welchem das Gewinde 6 angeordnet ist, zum gegenüberliegenden hinteren Ende vorzugsweise konisch oder schrittweise abgestuft abnimmt. Damit wird unter anderem bewirkt, dass beim Festziehen der Gewindeverbindung mit dem Gehäuse 1, wobei ja die Spannhülse 3 sich axial in Richtung auf das Gehäuse 1 hin bewegt, der Spannteil 10, insbesondere die Klemmzungen 12, radial zusammengepresst und der gesamte Spannteil 10 auch nach vorne hin, in Richtung des Gehäuses 1 hin, gedrückt werden, um das Kabel K im Inneren des Spannteils zu klemmen.

Im Längsabschnitt der Spannhülse 3, der im Bereich der Klemmzungen 12 zu liegen kommt, wenn Gehäuse 1 und Spannhülse 3 miteinander verschraubt sind, sind drei Sperrklinken 14 angeordnet, die Teil eines Formricht-Gesperres oder Zahngesperres zwischen der Spannhülse 3 und dem Spannteil 10 sind. Vorzugsweise sind drei derartige Sperrklinken 14 oder ähnliche, radial nach innen hin weisende Vorsprünge an der Innenseite der Spannhülse 3 vorgesehen, vorzugsweise gleichmässig über den Umfang verteilt. Sie weisen in Umfangsrichtung gesehen sägezahnartige Form auf, wobei deren kurze Flanken in Öffnungsrichtung der Gewindeverbindung zwischen Spannhülse 3 und Gehäuse 1 weisen. Die seitlichen Kanten der Klemmzungen 12 des Spannteils 10 bilden jeweils eine Rast, an welcher sich die Sperrklinken 14 mit ihren kurzen Flanken abstützen können, und stellen damit den korrespondierenden Teil des unidirektionalen Gesperres zwischen Spannhülse 3 und Spannteil 10 dar, das eine Relativverdrehung von Spannhülse 3 und Spannteil 10 in Öffnungsrichtung der Gewindeverbindung zwischen Spannhülse 3 und Gehäuse 1 verhindert und damit eine Sicherung dieser Gewindeverbindung gegen unbeabsichtigtes Lockern darstellt. In der Gegenrichtung kann mit Krafteinsatz die Sperrklinke 14 mit einer langen Flanke, relativ gesehen zu den sich an den Klemmzungen 12 abstützenden kurzen Flanken, über die Kanten der Klemmzungen 12 gedrückt und derart die Gewindeverbindung festgezogen werden. Die Positionierung von Sperrklinken und Rasten an Spannhülse und Spannteil könnte auch umgekehrt wie oben beschrieben gewählt werden.

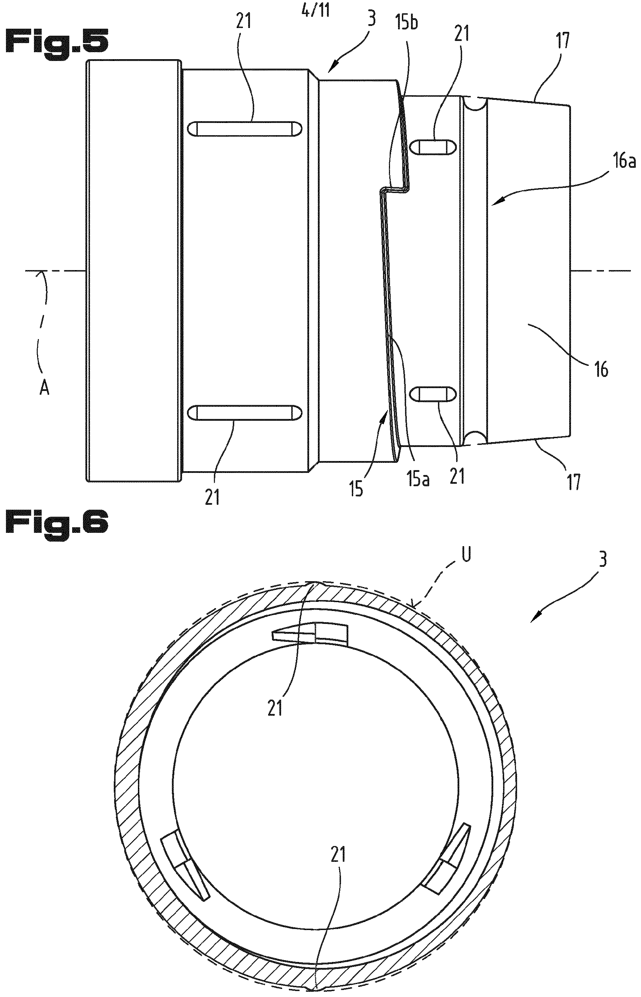

In den Seitenansichten der erfindungsgemässen Spannhülse 3 in Fig. 4 und Fig. 5 und ist ein aussen vom vorderen Rand mit dem Innengewinde 6 zum hinteren Rand hin gestuft geringer werdender Aussendurchmesser zu erkennen. Im mittleren Längsabschnitt ist eine umlaufende, in Umfangsrichtung etwas abgeschrägte Kulisse 15 ausgearbeitet, die mit zumindest einer langen, flachen Flanke 15a und zumindest einer steilen, in Öffnungsrichtung der Gewindeverbindung zwischen Spannhülse 3 und Gehäuse 1 weisenden Flanke 15b um die Spannhülse 3 herum verläuft.

Am hinteren Rand der Spannhülse 3 ist eine zumindest über einen Teil des Umfanges umlaufende Auskragung 16 des hinteren Randes der Spannhülse 3 vorgesehen. Die radiale Erstreckung dieser Auskragung 16 ist zumindest an einigen Stellen entlang des Umfanges, vorzugsweise über den gesamten Umfang der Spannhülse 3 grösser als der Innendurchmesser einer hinteren Öffnung der Zudrehhülse 4 und hält diese damit in der koaxialen aufgeschobenen Position auf der Spannhülse 3 und stellt sicher, dass die Zudrehhülse 4 nicht ungewollt nach hinten von der Spannhülse 3 rutschen oder abgezogen werden kann. Die Auskragung 16 bildet für die Zudrehhülse 4 einen hinteren, begrenzenden Anschlag 16a aus.

Die Auskragung 16 ist dabei jedoch derart gestaltet, dass sich die radiale Erstreckung zum hinteren Ende hin verringert und somit ein Aufschieben der Zudrehhülse 4 auf die Spannhülse 3 erleichtert, wobei sich zumindest der hintere Randbereich der Zudrehhülse vorzugsweise elastisch leicht aufweitet.

An der Auskragung 16 am hinteren, über die Zudrehhülse 4 hinausragenden Abschnitt der Spannhülse 3 ist zumindest eine Ansatzstelle 17 für ein Werkzeug angeordnet. Mit diesem kann ein Drehmoment auf die Spannhülse 3 ausgeübt werden, selbst wenn dies aufgrund der Abmessungen der Auskragung 16 rein manuell nicht möglich sein sollte. Vorzugsweise sind zumindest zwei Ansatzstellen 17 in Form von zumindest einem Paar ebener und in Längsrichtung parallel zur Mittelebene der Spannhülse 3 liegende Flächen gebildet, die parallel zueinander und einander in Bezug auf die Längsmittelachse A der Spannhülse 3 gegenüberliegend angeordnet sind. Typischerweise weisen die ebenen Flächen in Richtung der Längsmittelachse eine Breite zwischen 1 mm und 10 mm auf, vorzugsweise wird eine Breite zwischen 3 mm und 6 mm gewählt.

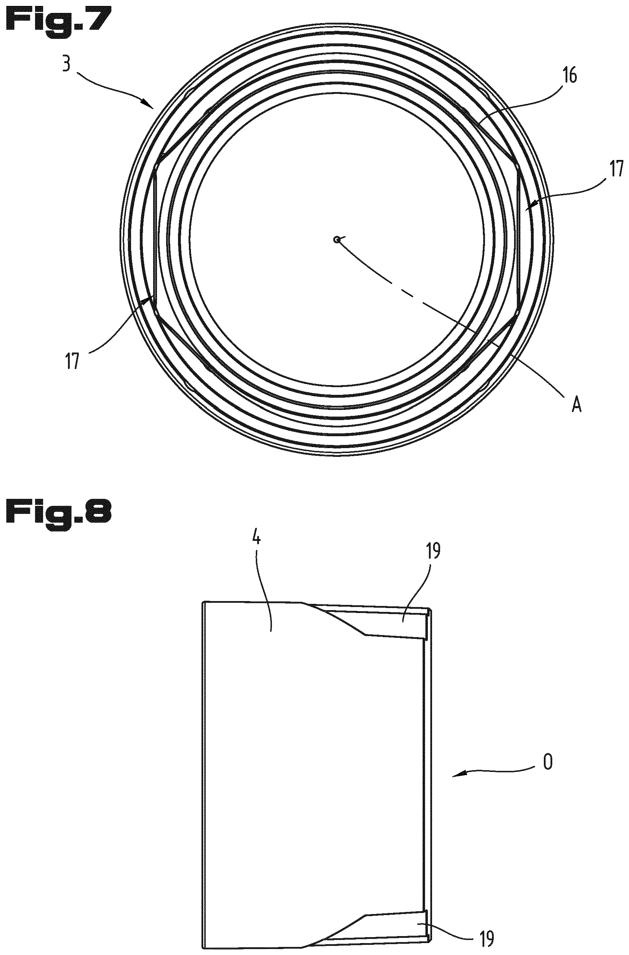

Fig. 7 bis Fig. 10 zeigen die erfindungsgemäss koaxial über der Spannhülse 3 aufgeschobene Zudrehhülse 4. Deren Länge ist geringer ist als jene der Spannhülse 3 und überdeckt koaxial und in Längsrichtung einen Teilabschnitt der Spannhülse 3. Zwischen Spannhülse 3 und Zudrehhülse 4 ist, um über die Zudrehhülse 4 zum Festziehen der Gewindeverbindung zwischen Spannhülse 3 und Gehäuse 1 bewirken zu können, ein unidirektionales Gesperre vorgesehen. Diese verhindert eine Relativverdrehung von Zudrehhülse 4 und Spannhülse 3 in Festziehrichtung der Gewindeverbindung über ein gewisses Mass oder Umfangs-Spiel hinaus und ermöglicht nach Überwindung dieses Spiels und im Eingriffszustand des Gesperres bei weiterer Verdrehung der Zudrehhülse 4 eine Mitnahme der darunterliegenden Spannhülse 3.

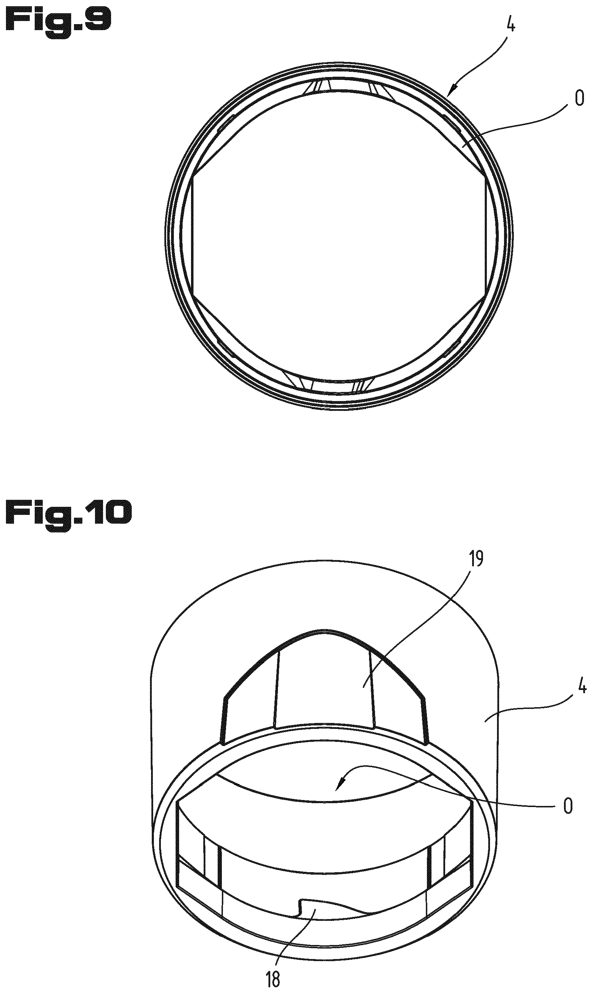

Auch zwischen Spannhülse 3 und Zudrehhülse 4 kommt vorteilhafterweise ein Formricht-Gesperre oder Zahngesperre zum Einsatz. Dabei kommt mit der oben beschriebenen Kulisse 15 der Spannhülse in Sperrrichtung zumindest eine Sperrklinke 18 der Zudrehhülse 4 - erkennbar in Fig. 9 und Fig. 10 - mit einer im Wesentlichen komplementär zur Kulisse 15 gestalteten Form in Eingriff. Vorzugsweise beträgt die Länge der oder jeder Sperrklinke 18 nur einen Bruchteil der Länge der Kulisse 15 und sind die Sperrklinken 18 im hintere Längsabschnitt näher der hinteren Öffnung O gleichmässig um den Umfang der Zudrehhülse 4 verteilt. Eine bevorzugte Variante sieht vor, dass die Länge der Sperrklinke 18 maximal 10% der Länge der Kulisse 15, insbesondere der längeren, flachen Flanke 15a davon, aufweist. Wenngleich es auch meist herstellungstechnisch vorteilhaft ist an der Spannhülse 3 die Kulisse 15 auszuarbeiten und die Sperrklinken 18 an der Zudrehhülse 4 vorzusehen, könnte diese Anordnung auch umgedreht werden.

Wie aus einem Vergleich der Figur 6 mit der Figur 8 klar zu erkennen ist, entspricht die Querschnittsform der hinteren Öffnung O der Zudrehhülse 4 im Wesentlichen der Querschnittsform des hinteren Endes der Spannhülse 3, insbesondere jener der Auskragung 16 bzw. des Anschlags 16a. Jedoch sind alle radialen Abstände für die Zudrehhülse 4 etwas geringer als die der Spannhülse 3, insbesondere von deren Anschlag 16a, so dass also die Querschnittsfläche der hinteren Öffnung O der Zudrehhülse 4 etwas geringer ist als die Querschnittsfläche des hinteren Endes der Spannhülse 3 bzw. von deren Auskragung 16 bzw. von deren Anschlag 16a.

An der äusseren Oberfläche der Zudrehhülse 4 sind an den Umfangspositionen der Sperrklinken 18 - oder falls die Kulisse 15 an der Innenseite der Zudrehhülse 4 vorgesehen ist, an den Stellen der steilen Flanken 15b - Griffflächen 19 vorgesehen, die durch Material und/oder Strukturierung eine bessere Handhabung der Zudrehhülse 4 sicherstellen. Überdies zeigen sie dem Benutzer die Position der Sperrklinken 18 oder der korrespondierenden Abschnitte der Kulisse 15 an, welche bei Handhabung vorteilhafterweise radial zusammengedrückt werden solle, um ein Abrutschen oder Überspringen der Sperrklinke 18 oder der steilen Flanke 15b zu verhindern und so die darunterliegende Spannhülse 3 bei Verdrehung der Zudrehhülse 4 sicher mitzunehmen.

Zum Zusammenbau der erfindungsgemässen Kabelsteckeranordnung wird die Zudrehhülse 4 vorteilhafterweise an den Griffflächen 19 ergriffen und in Zudrehrichtung der Gewindeverbindung zwischen den Gewinden 5 und 6 des Gehäuses 1 und der Spannhülse 3 gedreht. Allenfalls nach Überwindung des Spiels bzw. eines umfangsmässigen Abstandes zwischen der steilen Flanke 15b der Kulisse 15 und der Sperrklinke 18 der gegenüberliegenden Bauteile Gehäuse 1 und Spannhülse 3 wird die Spannhülse 1 von der Zudrehhülse 4 mitgenommen und die Gewindeverbindung festgezogen. Allenfalls kann ähnlich einer Ratschenanordnung die Zudrehhülse 4 mehrmals immer im gleichen Winkelbereich vor- und zurückgedreht werden, um die Gewindeverbindung festzuziehen, was den Zusammenbau der Kabelsteckeranordnung noch weiter erleichtert.

Bei Verdrehung der Zudrehhülse 4 im entgegengesetzten Sinn, in der Umfangsrichtung zum Lösen der Gewindeverbindung zwischen Gehäuse 1 und Spannhülse 3 aber greift das oben erläuterte Gesperre nicht und die Zudrehhülse 4 dreht leer durch, ohne die Gewindeverbindung in Aufdrehrichtung zu beaufschlagen. Die Sperrklinke 18 beispielsweise der Zudrehhülse 4 gleitet dabei die flache, lange Flanke 15a der Kulisse entlang, ohne ein Drehmoment in Umfangsrichtung auf Spannhülse 1 auszuüben. Die Zudrehhülse 4 wird dabei nur ein wenig in Richtung der Längsachse A der Spannhülse 3 nach hinten hin verschoben, bis das Ende der Flanke 15a erreicht ist und die Sperrklinke 18 an des steilen Flanke 15a wieder nach vorne gleiten kann.

Eine bevorzugte Ausführungsform der Erfindung weist als Spielausgleich zwischen der Spannhülse 3 und der Zudrehhülse 4 zumindest eine Erhebung 21 an der Aussenseite der Spannhülse 3 auf, welche Erhebung 21 den Zwischenraum zwischen Spannhülse 3 und Zudrehhülse 4 zumindest zum Grossteil überbrückt. Vorzugsweise überbrücken die Erhebungen 21, die als kürzere oder längere Stege, vorzugsweise in Längsrichtung der Spannhülse 3 orientiert, den Zwischenraum zwischen den beiden koaxialen Hülsen 3, 4 zur Gänze. Die Erhebungen 21, die auch in anderen Formen, beispielsweise in Form von Noppen oder kleinen, kreisförmigen Stegen, vorliegen können, könnten auch an der Innenseite der Zudrehhülse 4 angeordnet sein. Auch eine Positionierung der Erhebungen 21 an beiden Bauteilen 3, 4 ist möglich, solange die Gruppen an den einander gegenüberliegenden Hülsen 3, 4 in Achsrichtung voneinander beabstandet sind, um die Relativbewegung von Zudrehhülse 4 und Spannhülse 3 nicht zu behindern. Vorzugsweise sind zwei Erhebungen 21 auf der Spannhülse 3 angeordnet, die in geometrischer und funktioneller Hinsicht eine umhüllende Aussenkontur U mit im Wesentlichen elliptischer Form bilden (siehe Fig. 6). Auf dieser elliptischen Spannhülse 3 ist die Zudrehhülse 4 mit kreisförmiger Innenkontur aufgeschoben und auf der Spannhülse 3 ohne Spiel drehbar.

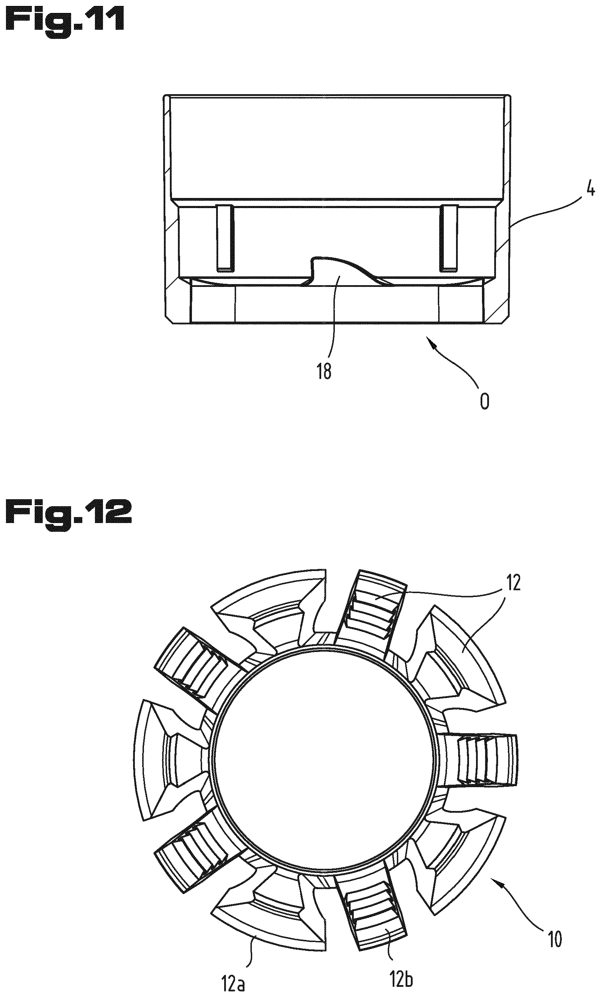

Das für die erfindungsgemässe Kabelsteckeranordnung besonders vorteilhafte, aber auch in anderen Arten von Steckverbindern vorteilhafte Spannteil 10 ist in Fig. 11 in seiner Ausgangsstellung in einer Ansicht von hinten auf die Klemmzungen 12 dargestellt. Dieses Spannteil 10 hat den Vorteil, dass es für Kabel K in einem sehr grossen Durchmesserbereich verwendet werden kann.

Es weist vorzugsweise zwei unterschiedliche Arten von Klemmzungen 12 auf, wobei auch noch weitere unterschiedliche Arten denkbar sind. Jede Klemmzunge 12a einer ersten Gruppe von Klemmzungen 12 ist zumindest am vorderen, dem vorderen Rand 11 des Spannteils 10 abgewandten Ende breiter als die Klemmzungen 12b der zweiten Gruppe. Die ersten Klemmzungen 12a verbreitern sich dazu vorzugsweise stetig mit grösser werdendem Abstand vom vorderen Rand 11 des Spannteils 10. Die Klemmzungen 12a der ersten Gruppe von Klemmzungen 12 sind bevorzugt an ihren Seitenkanten derart abgeschrägt, dass die Breite der Klemmzungen 12a zur Längsmittelachse des Spannteils 10 hin geringer wird. Diese Abschrägung, die beim radialen Zusammenpressen im Zuge des Verschraubens von Gehäuse 1 und Spannhülse 3 der Kabelsteckeranordnung eine Keilwirkung auf die jeweils benachbarten Klemmzungen, vorzugsweise Klemmzungen 12b einer zweiten Gruppe von Klemmzungen, ausübt, kann auch bei Klemmzungen 12 konstanter Breite vorgesehen sein.

Die Klemmzungen 12 vorzugsweise beider Gruppen weisen typischerweise hauptsächlich am äussersten Ende einen Abschnitt auf, der eine wesentliche Klemmwirkung auf das Kabel K ausüben oder in den Kabelmantel formschlüssig eindringen oder diesen verformen kann.

Die Klemmzungen 12b der zweiten Gruppe sind etwas schmäler ausgeführt und deren Kanten sind typischerweise über die gesamte Länge der Klemmzungen 12b parallel zueinander. Die Klemmzungen 12b der zweiten Gruppe von Klemmzungen 12 kann an ihren Seitenkanten derart abgeschrägt sein, dass die Breite der Klemmzungen 12b zur Längsmittelachse des Spannteils 10 hin grösser wird. Ein quergerippter oder durch ähnliche Strukturierung zur Erhöhung der Haltewirkung auf das Kabel K gestalteter Bereich, der durch Erhöhung der Reibung oder durch formschlüssiges zumindest teilweises Eindringen in den Kabelmantel eine hohe Klemmwirkung sicherstellt, erstreckt sich vom äusseren Ende der Klemmzungen 12b der zweiten Gruppe bis fast hin zum inneren Ende.

Vorteilhafterweise liegt - in Umfangsrichtung gesehen - zwischen jeweils zwei Klemmzungen 12a einer Gruppe eine Klemmzunge 12b einer anderen Gruppe. Bei zwei unterschiedlichen Arten von Klemmzungen 12, wie im dargestellten Ausführungsbeispiel, folgt somit auf jede Klemmzunge 12a einer ersten Gruppe eine Klemmzunge 12b der zweiten Gruppe und umgekehrt. Auch andere Abfolgen sind aber denkbar, wie etwa zwei Klemmzungen einer Gruppe flankiert von Klemmzungen der zweiten Gruppe, oder abwechselnde Gruppierungen von immer zwei Klemmzungen jeder unterschiedlichen Gruppe, usw.

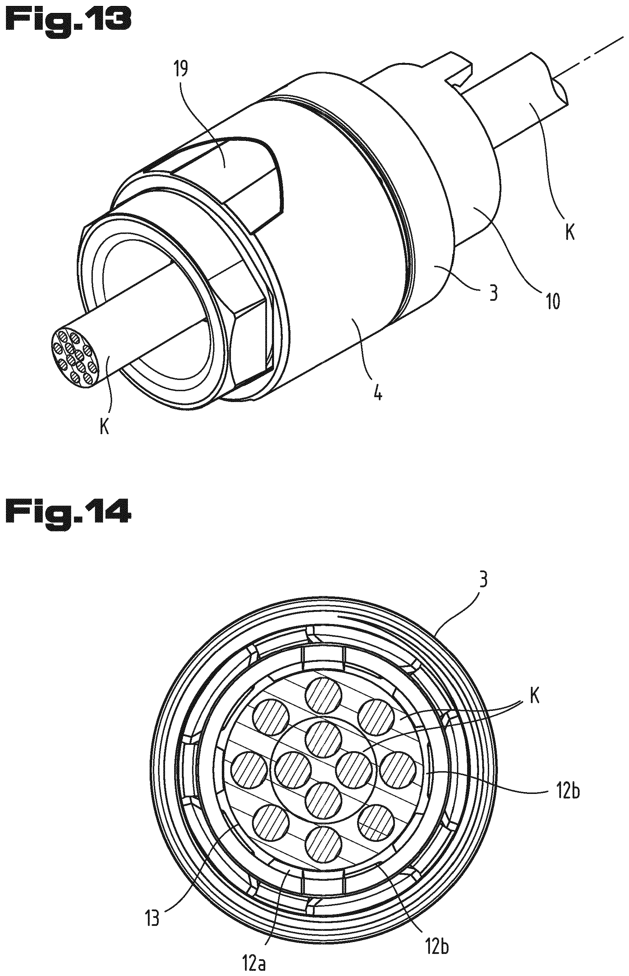

In der Fig. 12 ist in perspektivischer Ansicht eine Anordnung von Spannteil 12, Spannhülse 4, Zudrehhülse 4 und Dichtmanschette 13 in Verwendung mit einem Kabel K mit sehr grossem Durchmesser dargestellt. Von vorne, aus der Richtung des - hier nicht dargestellten - Gehäuses 1 her gesehen, ist die Ansicht der Fig. 13 erstellt. Darin ist zu erkennen, dass die Klemmzungen 12 beider Gruppen 12a, 12b fast fluchtend mit den übrigen Abschnitten des Spannteils 10 verlaufen, nur geringfügig zum hinteren Ende der Klemmzungen 12 hin radial zulaufend zusammengepresst sind, und flach auf dem Kabel K aufliegen, um dieses durch Wirkung beider Gruppen 12a und 12b zu klemmen.

Fig 14 hingegen zeigt eine Ansicht der Anordnung der Fig. 12 aus der gleichen Richtung wie Fig. 13, diesmal aber für ein Kabel K mit sehr geringem Durchmesser. Hier kann die Spannhülse 3 sehr weit nach vorne hin auf das Gehäuse 1 aufgeschraubt werden und drückt die Klemmzungen 12 radial nach innen. Dabei kommen die seitlichen Ränder der Klemmzungen 12 unterschiedlicher Gruppen aneinander zu liegen und werden bei weitergehender radialer Pressung beim Festziehen der Gewindeverbindung die Klemmzungen 12b der zweiten Gruppe durch die abgeschrägten Seitenflächen der Klemmzungen 12a der ersten Gruppe verstärkt nach innen und auf das Kabel K hin bzw. in den Mantel des Kabels K hinein gedrückt. Die Klemmung des Kabels K wird hier hauptsächlich durch die Klemmzungen 12b der zweiten Gruppe bewerkstelligt.

Wie aus den Fig. 13 und 14 auch hervorgeht, ist dabei die lichte Weite, d.h. der Innendurchmesser des Spannteils 10, der für die Durchführung des Kabels K zur Verfügung steht, nur geringfügig kleiner als der Aussendurchmesser des Spannteils 10 und auch des Gehäuses 1 bzw. der Spannhülse 3, welche also sehr dünnwandig und den Durchmesser der Kabelsteckeranordnung kaum wesentlich vergrössernd gestaltet sein kann. Die lichte Weite liegt in diesem Fall durchgehend, insbesondere aber zwischen den Enden der Klemmzungen 12, zwischen 70 und 80% des Durchmessers des Spannteils 10. Vorzugsweise liegt dieser Wert zwischen 75 und 95%. Wenn die Spannhülse 3 hingegen maximal mit dem Gehäuse 1 der Kabelsteckeranordnung verschraubt ist, sind die Klemmzungen 12 in ihrem maximal zusammengedrückten Zustand, sowohl in Umfangsrichtung als auch in radialer Richtung. Die Klemmzungen 12a der ersten Gruppe von Klemmzungen 12 liegen dabei mit ihren Seitenkanten aneinander an und pressen die Klemmzungen 12b der zweiten Gruppe maximal nach innen hin. Dabei ergibt sich zwischen den Klemmzungen 12, insbesondere zwischen den Klemmzungen 12b der zweiten Gruppe, die geringstmögliche lichte Weite, wobei der Durchmesser zur Durchführung des Kabels K durch das Spannteil 10 zwischen 20 und 40% des Durchmessers des Spannteils beträgt. Vorzugsweise liegt dieser Wert zwischen 10 und 30%. In Bezug auf das Gehäuse 1 bzw. die Spannhülse 3 liegen die Maximalwerte bzw. Minimalwerte für die lichte Weite 60 und 80% von deren Durchmesser bzw. bei 5 und 20% von deren Durchmesser.

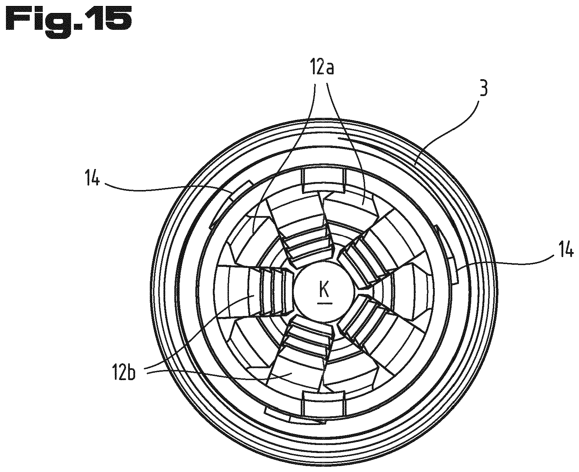

In der Fig. 15 ist eine weitere Ausführungsform der erfindungsgemässen Kabelsteckeranordnung abgebildet, wobei wiederum für gleiche Teile gleiche Bezugszeichen bzw. Bauteilbezeichnungen wie in den vorangegangenen Zeichnungsfiguren verwendet werden. Anstelle eines Steckerfortsatzes 2 weist das Gehäuse 1 nun einen vorzugsweise integral angeformten Einsteckfortsatz 22 auf. Abgesehen von diesem Unterschied sind der Aufbau und die Funktion gleich wie bislang im Zusammenhang mit den Figuren 1 bis 14 erläutert. Das Gehäuse 1 und Steckerfortsatz 2 bzw. Einsteckfortsatz 22 können je nach Steckertyp also variieren, um alle gängigen Steckverbinder und Kontaktarten, von XLR-Steckern, Datensteckern beispielsweise vom RJ45-Typ, über alle möglichen Standard- oder Proprietärtypen abzudecken.

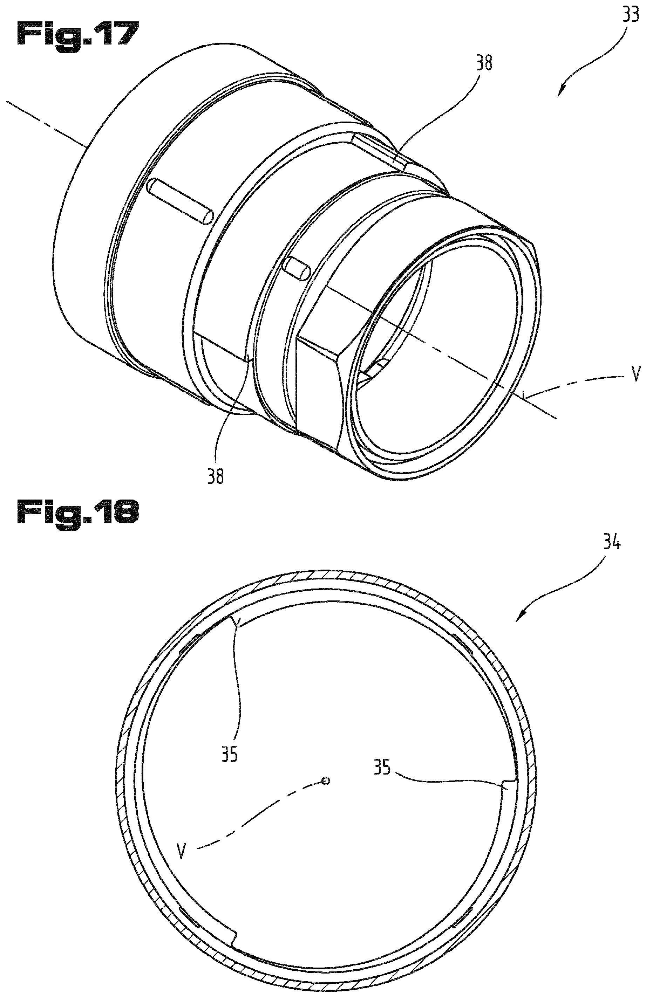

Während die bislang beschriebene und in den Fig. 1 bis 15 dargestellte Ausführungsform der Erfindung vorsieht, dass sich die Höhe der Kulisse 15 und der Sperrklinke 18 sich in einer Richtung parallel zur Drehachse von Spannhülse 3 und Zudrehhülse 4 verändern, sind auch andere Gestaltungen möglich. So ist in Fig. 17 eine Ausführungsform abgebildet, bei welcher eine Kulisse 35 an der Innenseite einer Zudrehhülse 34 angeformt ist, deren Höhe sich in radialer Richtung auf die Achse V der Relativverdrehung dieser Zudrehhülse 34 und einer komplementären Spannhülse 33 verändert. Dabei sind an dieser letzteren Spannhülse 33 an deren Aussenseite Sperrklinken 38 angeordnet, wie in Fig. 18 zu sehen ist, die ebenfalls sich in radialer Richtung in Bezug auf die Achse V verändernde Höhe aufweisen. Diese Kulissen 35 und Sperrklinken 38 kommen in gleicher Art in Eingriff bzw. können mit geringer radialer Ausbauchung der Zudrehhülse 34 aneinander gleiten wie für das bislang beschriebene radial höhenveränderliche Kulissen-Sperrklinken-System erläutert.

Neben den oben erläuterten Ausführungsformen mit feststehenden Strukturen für das Gesperre sind auch Konstruktionen denkbar, bei welchen mittels eines Werkzeuges nicht auf die Spannhülse 3 selbst eingewirkt wird, sondern bei denen mittels eines Werkzeuges zumindest ein Verriegelungselement zwischen Spannhülse 3 und Zudrehhülse 4 in eine Stellung gebracht werden kann, das eine drehfeste, allenfalls temporäre Koppelung zwischen Spannhülse 3 und Zudrehhülse 4 bewirkt. Beispielsweise könnte mittels eines Stiftes oder eines Schraubenziehers, der in eine vorzugsweise axiale Öffnung der Kabelsteckeranordnung eingeführt werden kann, ein innerer Sperrstift verschoben oder eine Sperrklinke verschwenkt werden, die die Spannhülse 3 und die Zudrehhülse 4 drehfest verbinden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder grösser und enden bei einer oberen Grenze von 10 oder weniger, z.B. 1 bis 1,7, oder 3,2 bis 8,1, oder 5,5 bis 10.

Der Ordnung halber sei abschliessend darauf hingewiesen, dass zum besseren Verständnis des Aufbaus Elemente teilweise unmassstäblich und/oder vergrössert und/oder verkleinert dargestellt wurden.

### Bezugszeichenaufstellung

- 1: Gehäuse
- 2: Steckerfortsatz
- 3: Spannhülse
- 4: Zudrehhülse
- 5: Aussengewinde

- 6: Innengewinde
- 7: Dichtring
- 8: Federelement
- 9: Führungssteg
- 10: Spannteil

- 11: Vorderer Rand
- 12: Klemmzunge
- 12a: Erste Klemmzunge
- 12b: Zweite Klemmzunge
- 13: Dichtmanschette

- 14: Sperrklinke
- 15: Kulisse
- 15a: Flache Flanke
- 15b: Steile Flanke
- 16: Auskragung

- 16a: Anschlag
- 17: Ansatzstellen
- 18: Sperrklinke
- 19: Grifffläche
- 20: Entriegelungsschieber

- 21: Erhebung
- 22: Einsteckfortsatz
- A: Längsmittelachse
- O: Hintere Öffnung
- U: Umhüllende

## Patentansprüche

1. Spannteil zum Klemmen eines Kabels (K) in einer Kabelsteckeranordnung, mit einem vorderen Randbereich (11) zum Anliegen an einem Gehäuse (1) der Kabelsteckeranordnung und/oder einem darin eingeschobenen Steckerfortsatz (2), und einem hinteren Abschnitt, der durch eine Anzahl von entlang des Umfangs verteilten Klemmzungen (12) gebildet ist, die in radialer Richtung zusammengedrückt werden können, wobei der hintere Abschnitt zumindest einen radial zusammendrückbaren und das Kabel (K) umgreifenden und in zusammengedrücktem Zustand das Kabel (K) klemmenden Abschnitt darstellt, wobei die verteilten Klemmzungen (12) zumindest zwei unterschiedliche Arten (12a, 12b) von Klemmzungen (12) umfassen, wobei jede Klemmzunge (12a) einer ersten Gruppe von Klemmzungen (12) zumindest am dem Spannteil (10) abgewandten Ende breiter ist als die Klemmzungen (12b) einer zweiten Gruppe und
**dadurch gekennzeichnet, dass**
die ersten Klemmzungen (12a) sich mit grösser werdendem Abstand vom vorderen Rand (11) des Spannteils (10) verbreitern.

2. Spannteil nach Anspruch 1, **dadurch gekennzeichnet, dass** die Klemmzungen (12a) der ersten Gruppe von Klemmzungen (12) an ihren Seitenkanten abgeschrägt sind, wobei die Breite mit radial grösser werdendem Abstand zur Mittelachse des Spannteils (10) vorzugsweise grösser wird, insbesondere wobei die ersten Klemmzungen (12a) an ihrem Ende einen Abschnitt aufweisen, der zur Ausübung einer Klemmwirkung auf ein Kabel (K) zum formschlüssigen Eindringen in den Mantel eines Kabels (K) ausgebildet sind.

3. Spannteil nach einem der Ansprüche 1 oder 2, **dadurch gekennzeichnet, dass** jede Klemmzunge (12b) der zweiten Gruppe von Klemmzungen (12) etwas schmäler ausgeführt ist als die Klemmzungen (12a) der ersten Gruppe.

4. Spannteil nach einem der Ansprüche 1 bis 3, **dadurch gekennzeichnet, dass** die Seitenkanten der Klemmzungen (12b) der zweiten Gruppe vorzugsweise über deren gesamte Länge parallel zueinander verlaufen.

5. Spannteil nach einem der Ansprüche 1 bis 4, **dadurch gekennzeichnet, dass** sich vom äusseren Ende der Klemmzungen (12b) der zweiten Gruppe von Klemmzungen (12) bis fast hin zu deren innerem Ende ein zur Erhöhung der Haltewirkung auf das Kabel (K) gestalteter Bereich erstreckt.

6. Spannteil nach einem der Ansprüche 1 bis 5, **dadurch gekennzeichnet, dass** bei fluchtend mit dem vorderen Randbereich (11) verlaufenden Klemmzungen (12) die lichte Weite zwischen den Enden der Klemmzungen (12) zwischen 70 und 95% des Durchmessers des Spannteils (10) beträgt und bei maximal zusammengedrückten Klemmzungen (12), wobei die ersten Klemmzungen (12a) aneinander liegen, die lichte Weite zwischen den Enden der Klemmzungen (12), vorzugsweise zwischen den Klemmzungen (12b) der zweiten Gruppe, zwischen 10 und 40% des Durchmessers des Spannteils (10) beträgt.

7. Kabelsteckeranordnung für elektrische und/oder optische Kabel (K) und zur Verbindung mit einer komplementären Steckeranordnung, umfassend:
a) ein Gehäuse (1) zur Aufnahme der Kontaktelemente zur elektrischen und/oder optischen Kontaktierung der komplementären Steckeranordnung, mit einem am hinteren Rand angeordneten Gewinde (5);
b) ein Spannteil (10), gemäss einem der Ansprüche 1 bis 6, das zumindest abschnittsweise radial zusammendrückbar ist und das Kabel (K) umgreift und in zusammengedrücktem Zustand das Kabel (K) klemmt;
c) eine Spannhülse (3) mit einem am vorderen Rand angeordneten Gewinde (6) zur Ausbildung einer Gewindeverbindung mit dem Gewinde (5) am Gehäuse (1);
wobei bei festgezogener Gewindeverbindung die Spannhülse (3), das Spannteil (10), das Gehäuse (1) und das Kabel (K) miteinander verspannt und vorzugsweise das Kabel (K) gegenüber dem Spannteil (10) und/oder das Spannteil (10) gegenüber dem Gehäuse (1) verdrehsicher positioniert ist/sind.

8. Kabelsteckeranordnung nach Anspruch 7, wobei die Kabelsteckeranordnung eine Zudrehhülse (4) umfasst, deren Länge geringer ist als jene der Spannhülse (3) und die koaxial über zumindest einen Teilabschnitt der Spannhülse (3) geschoben ist, und ein unidirektionales Gesperre (15, 18) zumindest zwischen Spannhülse (3) und Zudrehhülse (4), das eine Relativverdrehung von Zudrehhülse (4) und Spannhülse (3) in Festziehrichtung der Gewindeverbindung zwischen Spannhülse (3) und Gehäuse (1) über ein gewisses Mass hinaus verhindert.

9. Kabelsteckeranordnung nach Anspruch 8, **gekennzeichnet durch** ein unidirektionales Gesperre zwischen Spannhülse (3) und Spannteil (10), das eine Relativverdrehung von Spannhülse (3) und Spannteil (10) in Öffnungsrichtung der Gewindeverbindung zwischen Spannhülse (3) und Gehäuse (1) verhindert und aufweisend ein Formricht-Gesperre oder Zahngesperre zwischen Spannhülse (3) und Spannteil (10), wobei an entweder der Spannteil (10) oder der Spannhülse (3) zumindest eine Rast und am anderen Bauteil zumindest eine Sperrklinke (14) ausgearbeitet sind, insbesondere wobei mehrere, vorzugsweise drei, gleichmässig über den Umfang verteilte sägezahnförmige Sperrklinken (14) mit kurzen Flanken ausgearbeitet sind, die in Öffnungsrichtung der Gewindeverbindung zwischen Spannhülse (3) und Gehäuse (1) weisen.

10. Kabelsteckeranordnung nach einem der Ansprüche 8 bis 9, **gekennzeichnet durch** ein Formricht-Gesperre oder Zahngesperre (15, 18) zwischen Spannhülse (3) und Zudrehhülse (4), wobei an entweder der Zudrehhülse (4) oder der Spannhülse (3) eine Kulisse (15) mit zumindest einer langen, flachen Flanke (15a) und zumindest einer steilen, in Öffnungsrichtung der Gewindeverbindung zwischen Spannhülse (3) und Gehäuse (1) weisenden Flanke (15b) ausgearbeitet ist und am anderen Bauteil eine Sperrklinke (18) mit einer im Wesentlichen komplementären Form ausgearbeitet ist.

11. Kabelsteckeranordnung nach Anspruch 10, **dadurch gekennzeichnet, dass** die Höhe der Kulisse (15) und der Sperrklinke (18) sich in einer Richtung parallel zur Drehachse von Spannhülse (3) und Zudrehhülse (4) verändern, insbesondere wobei an der Spannhülse (3) die Kulisse (15) und an der Zudrehhülse (4) die Sperrklinke (18) ausgebildet sind.

12. Kabelsteckeranordnung nach einem der Ansprüche 8 bis 11, **dadurch gekennzeichnet, dass** der dem Gewinde (6) gegenüberliegende hintere Rand der Spannhülse (3) über den hinteren Rand der Zudrehhülse (4) hinausragt und Ansatzstellen (17) für ein Werkzeug zur Ausübung eines Drehmoments auf die Spannhülse (3) aufweist, insbesondere wobei die Ansatzstellen (17) durch zumindest ein Paar ebener Flächen gebildet sind, die parallel zueinander und einander in Bezug auf die Längsmittelachse (A) der Spannhülse (3) gegenüberliegend angeordnet sind .

13. Kabelsteckeranordnung nach einem der Ansprüche 8 bis 12, **gekennzeichnet durch** einen die Verschiebbarkeit der Zudrehhülse (4) zum hinteren Rand der Spannhülse (3) begrenzenden Anschlag (16a).

14. Kabelsteckeranordnung nach Anspruch 13, **gekennzeichnet durch** eine zumindest über einen Teil des Umfanges umlaufende Auskragung (16) des hinteren Randes der Spannhülse (3), wobei die radiale Erstreckung der Auskragung (16) grösser ist als der Innendurchmesser einer hinteren Öffnung (O) der Zudrehhülse (4) und sich vorzugsweise zum hinteren Ende der Spannhülse (3) hin verringert.

15. Kabelsteckeranordnung nach einem der Ansprüche 8 bis 14, **gekennzeichnet durch** zumindest eine Erhebung (21) vorzugsweise an der Aussenseite der Spannhülse (3), welche Erhebung (21) den Zwischenraum zwischen Spannhülse (3) und Zudrehhülse (4) zumindest Grossteils, vorzugsweise zur Gänze, überbrückt.

## Claims

1. A clamping part for clamping a cable (K) in a cable connector assembly, having a front edge region (11) for resting against a housing (1) of the cable connector assembly and/or a connector extension (2) inserted therein, and a rear section that is formed by a number of clamping tongues (12) distributed around the circumference, which clamping tongues can be compressed in the radial direction,
wherein the rear section represents at least one radially compressible section that encloses the cable (K) and clamps the cable (K) in the compressed state, wherein the distributed clamping tongues (12) comprise at least two different kinds (12a, 12b) of clamping tongues (12), wherein each clamping tongue (12a) of a first group of clamping tongues (12) is wider, at least at the end facing away from the clamping part (10), than the clamping tongues (12b) of a second group **characterized in that**
the first clamping tongues (12a) widen continuously as the distance from the front edge (11) of the clamping part (10) increases.

2. The clamping part as claimed in claim 1, **characterized in that** the clamping tongues (12a) in a first group of clamping tongues (12) are beveled on their side edges, wherein the width preferably increases as the distance from the central axis of the clamping part (10) becomes radially greater in particular wherein the first clamping tongues (12a) have a section at their end which is designed to exert a clamping action on a cable (K) for form-fitting penetration of the jacket of a cable (K).

3. The clamping part as claimed in any one of claims 1 or 2, **characterized in that** each clamping tongue (12b) of the second group of clamping tongues (12) is configured to be slightly narrower than the clamping tongues (12a) of the first group.

4. The clamping part as claimed in any one of claims 1 to 3, **characterized in that** the side edges of the clamping tongues (12b) of the second group run parallel to one another, preferably over their entire length.

5. The clamping part as claimed in any one of claims 1 to 4, **characterized in that** a region designed to increase the holding effect on the cable (K) extends from the outer end of the clamping tongues (12b) in the second group of clamping tongues (12) almost to the inner end thereof.

6. The clamping part as claimed in any one of claims 1 to 5, **characterized in that** when the clamping tongues (12) are aligned with the front edge region (11), the clearance width between the ends of the clamping tongues (12) is between 70 and 95% of the diameter of the clamping part (10), and when the clamping tongues (12) are compressed to the maximum, wherein the first clamping tongues (12a) are adjacent to one another, the clearance width between the ends of the clamping tongues (12), preferably between the clamping tongues (12b) of the second group, is between 10 and 40% of the diameter of the clamping part (10).

7. A cable connector assembly for electrical and/or optical cables (K) and for connection to a complementary connector arrangement, comprising:
a) a housing (1) for receiving the contact elements for making electrical and/or optical contact with the complementary connector assembly, having a thread (5) arranged on the rear edge;
b) a clamping part (10) according to one of the claims 1 to 6, that is at least partially radially compressible and encompasses the cable (K) and clamps the cable (K) in the compressed state;
c) a clamping sleeve (3) with a thread (6) arranged on the front edge for establishing a threaded connection with the thread (5) on the housing (1);
wherein when the threaded connection is tightened, the clamping sleeve (3), the clamping part (10), the housing (1), and the cable (K) are clamped to one another, and the cable (K) is preferably positioned in respect of the clamping part (10), and/or the clamping part (10) is positioned in respect of the housing (1), in a non-rotational manner.

8. The cable connector assembly as claimed in claim 7, wherein the cable connector assembly comprises a tightening sleeve (4), the length of which is less than that of the clamping sleeve (3) and which is coaxially slipped over at least a portion of the clamping sleeve (3), and a unidirectional lock (15, 18) at least between the clamping sleeve (3) and the tightening sleeve (4), which prevents a relative rotation of the tightening sleeve (4) and the clamping sleeve (3) beyond a certain extent in the tightening direction of the threaded connection between the clamping sleeve (3) and the housing (1).

9. The cable connector assembly as claimed in claim 8, **characterized by** a unidirectional lock between the clamping sleeve (3) and clamping part (10) which prevents a relative rotation of the clamping sleeve (3) and the clamping part (10) in the opening direction of the threaded connection between the clamping sleeve (3) and the housing (1) and comprising a form-fit lock or toothed lock between the clamping sleeve (3) and the clamping part (10), wherein on either the clamping part (10) or the tightening sleeve (3) at least one ratchet is formed and on the other component at least one locking pawl (14), in particular wherein multiple, preferably three, sawtooth-shaped locking pawls (14) with short flanks facing in the opening direction of the threaded connection between the clamping sleeve (3) and the housing (1) evenly distributed over the circumference.

10. The cable connector assembly as claimed in any one of claims 8 to 9, **characterized by** a form-fit lock or toothed lock (15, 18) between the clamping sleeve (3) and the tightening sleeve (4), wherein a guide (15) having at least one long, flat flank (15a) and at least one steep flank pointing in the opening direction of the threaded connection between the clamping sleeve (3) and the housing (1) is formed on either the tightening sleeve (4) or the clamping sleeve (3), and a locking pawl (18) with a substantially complementary shape is formed on the other component.

11. The cable connector assembly as claimed in claim 10, **characterized in that** the height of the guide (15) and the locking pawl (18) are changed in a direction parallel to the axis of rotation of the clamping sleeve (3) and the tightening sleeve (4), in particular wherein the guide (15) is formed on the clamping sleeve (3) and the locking pawl (18) is formed on the tightening sleeve (4).

12. The cable connector assembly as claimed in any one of claims 8 to 11, **characterized in that** the rear edge of the clamping sleeve (3) lying opposite the thread (6) projects beyond the rear edge of the tightening sleeve (4), and has engagement points (17) for a tool to apply torque to the clamping sleeve (3), in particular wherein the engagement points (17) are formed by at least one pair of flat surfaces which are parallel to one another and are arranged opposite one another with respect to the longitudinal central axis (A) of the clamping sleeve (3).

13. The cable connector assembly as claimed in any one of claims 8 to 12, **characterized by** a stop (16a) that limits the movability of the tightening sleeve (4) in respect of the rear edge of the clamping sleeve (3).

14. The cable connector assembly as claimed in claim 13, **characterized by** a projection (16) of the rear edge of the clamping sleeve (3) that extends over at least part of the circumference, wherein the radial extent of the projection (16) is greater than the inner diameter of a rear opening (O) of the tightening sleeve (4) and preferably diminishes towards the rear end of the clamping sleeve (3).

15. The cable connector assembly as claimed in any one of claims 8 to 14, **characterized by** at least one protrusion (21) preferably on the outside of the clamping sleeve (3), which protrusion (21) bridges the space between the clamping sleeve (3) and the tightening sleeve (4) at least for the most part, preferably entirely.

## Revendications

1. Élément de serrage destiné à pincer un câble (K) dans un ensemble connecteur de câble, doté d'une zone de bord avant (11) destiné à reposer sur un boîtier (1) de l'ensemble connecteur de câble et/ou d'un prolongement de connecteur inséré dans celui-ci (2) et d'une section arrière, laquelle est formée par un nombre de languettes de pincement (12) réparties le long du pourtour, lesquelles sont compressibles dans la direction radiale, dans lequel la section arrière constitue au moins une section radialement compressible entourant le câble (K) et pinçant le câble (K) lorsqu'elle est à l'état comprimé, dans lequel les languettes de pincement réparties (12) comprennent au moins deux sortes différentes (12a, 12b) de languettes de pincement (12), dans lequel chaque languette de pincement (12a) d'un premier groupe de languettes de pincement (12) est plus large que les languette de pincement (12b) d'un deuxième groupe au moins à l'extrémité se détournant de l'élément de serrage (10) et
**caractérisé en ce que** les premières languettes de pincement (12a) s'élargissent à mesure que la distance par rapport au bord avant (11) de l'élément de serrage (10) augmente.

2. Élément de serrage selon la revendication 1, **caractérisé en ce que** les languettes de pincement (12a) du premier groupe de languettes de pincement (12) sont biseautées sur leurs bords latéraux, dans lequel la largeur augmente de préférence à mesure que la distance radiale par rapport à l'axe médian de l'élément de serrage (10) s'accroît, en particulier dans lequel les premières languettes de serrage (12a) comportent à leur extrémité une partie conçue pour exercer une action de pincement sur un câble (K) afin de pénétrer par complémentarité de forme dans la gaine d'un câble (K).

3. Élément de serrage selon l'une des revendications 1 ou 2, **caractérisé en ce que** chaque languette de pincement (12b) du deuxième groupe de languettes de pincement (12) est réalisée comme légèrement plus étroite que les languettes de pincement (12a) du premier groupe.

4. Élément de serrage selon l'une des revendications 1 à 3, **caractérisé en ce que** les bords latéraux des languettes de pincement (12b) du deuxième groupe sont parallèles les uns aux autres, de préférence sur toute la longueur de celles-ci.

5. Élément de serrage selon l'une des revendications 1 à 4, **caractérisé en ce que** qu'une zone conçue pour accroître l'effet de maintien sur le câble (K) s'étend depuis l'extrémité extérieure des languettes de pincement (12b) du deuxième groupe de languettes de pincement (12) quasiment jusqu'à leur extrémité intérieure.

6. Élément de serrage selon l'une des revendications 1 à 5, **caractérisé en ce que**, lorsque les languettes de pincement (12) s'étendent dans l'alignement de la zone de bord avant (11), la largeur libre entre les extrémités des languettes de pincement (12) est comprise entre 70 et 95 % du diamètre de l'élément de serrage (10) et, lorsque les languettes de pincement (12) sont comprimées au maximum, dans lequel les premières languettes de pincement (12a) sont en contact les unes avec les autres, la largeur libre entre les extrémités des languettes de pincement (12), de préférence entre les languettes de pincement (12b) du deuxième groupe, est comprise entre 10 et 40 % du diamètre de l'élément de serrage (10).

7. Ensemble connecteur de câble pour câble (K) électrique et/ou optique et destiné au raccordement avec un ensemble connecteur complémentaire, comprenant :
a) un boîtier (1) destiné à accueillir les éléments de contact pour la mise en contact électrique et/ou optique de l'ensemble connecteur complémentaire, doté d'un filetage (5) disposé sur le bord arrière ;
b) un élément de serrage (10) selon l'une des revendications 1 à 6, lequel est au moins partiellement radialement compressible et entoure le câble (K) et pince le câble (K) lorsqu'il est à l'état comprimé ;
c) un manchon de serrage (3) doté d'un filetage (6) disposé sur le bord avant et destiné à réaliser un raccord fileté avec le filetage (5) du boîtier (1) ;
dans lequel, lorsque le raccord fileté est serré, le manchon de serrage (3), l'élément de serrage (10), le boîtier (1) et le câble (K) sont serrés les uns contre les autres et, de préférence, le câble (K) est positionné de manière à ne pas pouvoir tourner par rapport à l'élément de serrage (10) et/ou l'élément de serrage (10) est positionné de manière à ne pas pouvoir tourner par rapport au boîtier (1).

8. Ensemble connecteur de câble selon la revendication 7, dans lequel l'ensemble connecteur de câble comprend un manchon de fermeture (4) dont la longueur est inférieure à celle du manchon de serrage (3) et qui est enfilé de manière coaxiale sur au moins une partie du manchon de serrage (3), ainsi qu'un verrou unidirectionnel (15, 18) au moins entre le manchon de serrage (3) et le manchon de fermeture (4), qui empêche une rotation relative du manchon de fermeture (4) et du manchon de serrage (3) dans le sens de serrage du raccord fileté entre le manchon de serrage (3) et le boîtier (1) au-delà d'une certaine mesure.

9. Ensemble connecteur de câble selon la revendication 8, **caractérisé par** un verrou unidirectionnel entre le manchon de serrage (3) et l'élément de serrage (10), qui empêche une rotation relative du manchon de serrage (3) et de l'élément de serrage (10) dans le sens d'ouverture du raccord fileté entre le manchon de serrage (3) et le boîtier (1), et comportant un verrou par complémentarité de forme ou un verrou denté entre le manchon de serrage (3) et l'élément de serrage (10), dans lequel au moins un cran est formé soit sur l'élément de serrage (10), soit sur le manchon de serrage (3), et au moins un cliquet (14) est formé sur l'autre pièce, en particulier dans lequel plusieurs, de préférence trois, cliquets (14) en forme de dents de scie sont réalisés avec des flancs courts et répartis uniformément sur la circonférence, lesquels sont orientés dans le sens d'ouverture du raccord fileté entre le manchon de serrage (3) et le boîtier (1).

10. Ensemble connecteur de câble selon la revendication 8 ou 9, **caractérisé par** un verrou par complémentarité de forme ou un verrou denté (15, 18) entre le manchon de serrage (3) et le manchon de fermeture (4), dans lequel une coulisse (15) dotée d'au moins un flanc long et plat (15a) et d'au moins un flanc raide (15b) s'étendant dans le sens d'ouverture du raccord fileté entre le manchon de serrage (3) et le boîtier (1) est réalisée soit sur le manchon de fermeture (4), soit sur le manchon de serrage (3), et un cliquet (18) de forme sensiblement complémentaire est réalisé sur l'autre pièce.

11. Ensemble connecteur de câble selon la revendication 10, **caractérisé en ce que** la hauteur de la coulisse (15) et du cliquet (18) varient dans une direction parallèle à l'axe de rotation du manchon de serrage (3) et du manchon de fermeture (4), en particulier dans lequel la coulisse (15) est réalisée sur le manchon de serrage (3) et le cliquet (18) est réalisé sur le manchon de fermeture (4).

12. Ensemble connecteur de câble selon l'une des revendications 8 à 11, **caractérisé en ce que** le bord arrière du manchon de serrage (3), à l'opposé du filetage (6), dépasse du bord arrière du manchon de fermeture (4) et comporte des points d'attache (17) pour un outil destiné à exercer un couple sur le manchon de serrage (3), en particulier dans lequel les points d'attache (17) sont formés par au moins une paire de surfaces planes, lesquelles sont disposées de manière parallèle et en opposition les uns aux autres par rapport à l'axe médian longitudinal (A) du manchon de serrage (3).

13. Ensemble connecteur de câble selon l'une des revendications 8 à 12, **caractérisé par** une butée (16a) limitant le coulissement du manchon de fermeture (4) au bord arrière du manchon de serrage (3).

14. Ensemble connecteur de câble selon la revendication 13, **caractérisé par** une collerette (16) du bord arrière du manchon de serrage (3) entourant au moins une partie de la circonférence, dans lequel l'étendue radiale de la collerette (16) est supérieure au diamètre intérieur d'une ouverture intérieure (O) du manchon de fermeture (4) et se rétrécit de préférence jusqu'à l'extrémité arrière du manchon de serrage (3).

15. Ensemble connecteur de câble selon l'une des revendications 8 à 14, **caractérisé par** au moins une élévation (21), de préférence sur la face extérieure du manchon de serrage (3), laquelle élévation (21) comble, au moins en grande partie, de préférence entièrement, l'espace intermédiaire entre le manchon de serrage (3) et le manchon de fermeture (4).
